Europäisches Patentamt

European Patent Office

Office européen des brevets

(19)

(11) EP 1 717 209 A1

(12) EUROPEAN PATENT APPLICATION

(43) Date of publication:
02.11.2006 Bulletin 2006/44

(51) Int Cl.:
C02F 11/02 (2006.01)

(21) Application number: 05103377.7

(22) Date of filing: 26.04.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: PURAC AB
221 05 Lund (SE)

(72) Inventor: Gotthardsson, Sören
241 37 Eslöv (SE)

(74) Representative: Holmberg, Nils Anders Patrik et al
Dr Ludwig Brann Patentbyra AB
P.O. Box 17192
104 62 Stockholm (SE)

(54) **Method and system for treating sludge**

(57)    The present invention relates to a method of treating sludge in a system comprising a pump (10) having an inlet and an outlet connectable to a sludge feeding line (12) being connectable to a heat exchanger (16), comprising the steps of: feeding sludge with the aid of the pump (10); decreasing the viscosity of the sludge in the vicinity of the heat exchanger (16) in a viscosity decreasing device (18); and passing the sludge having decreased viscosity through the heat exchanger (16) for heating the sludge. The invention further relates to a system for treating sludge a computer program (33) for a control means (28) of the system of treating sludge, and a computer program product comprising computer readable medium (32) and the computer program (33). The decreased viscosity of the sludge provides for an improved heat transfer in the heat exchanger and thereby a process and energy efficient way of heating sludge.

Fig. 3a

**Description**

TECHNICAL FIELD

The present invention relates to treatment of sludge obtained from, for example, sewage treatment plants, and, in particular, to a method and system for treating sludge that has a high dry substance content in a process and energy efficient way.

BACKGROUND OF THE INVENTION

Handling and treatment of sludge in connection with sewage treatment plants is a major issue for planning and running such a plant. The sludge that is obtained during the sewage treatment process has to be treated in suitable ways.

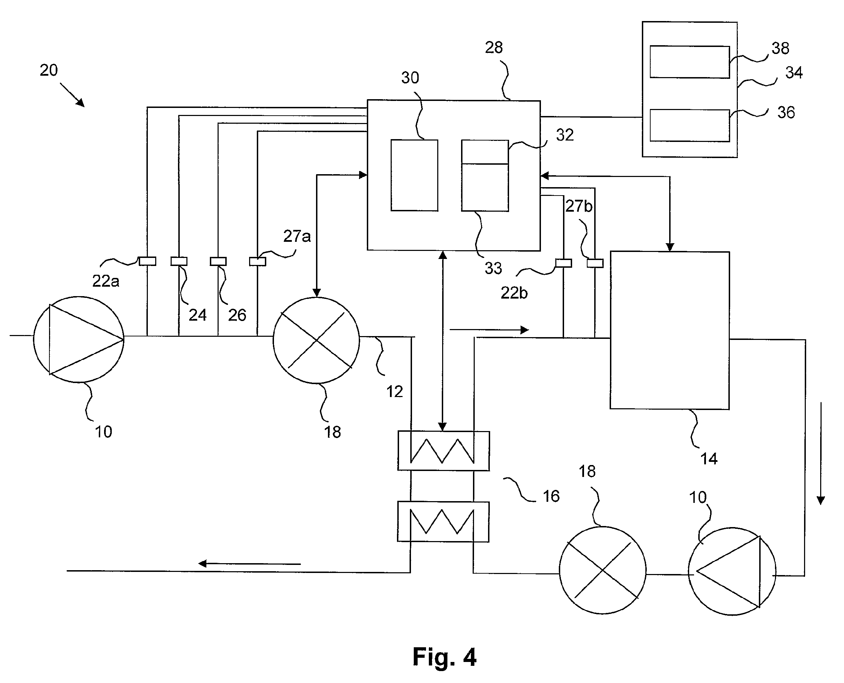

Commonly the sludge is thickened and then fed by a pump 10 in a sludge feeding line 12 to a digester 14 for treating the sludge, Fig. 1. The digesters usually work with different specific temperatures, commonly 37 or 55°C. Because the incoming sludge after the de-thickening may be in the range 8-15°C, it is advantageous to recover heat from the outgoing sludge for pre-heating the incoming sludge, which may be performed by means of a heat-exchanger, if the sludge is heated before entering the digester, which may be done with a heat exchanger, 16. During the process in the digester, the sludge may also circulated through a further heat exchanger for heating the sludge to the appropriate temperature.

The treated sludge that is taken out of the digester has an increased temperature, and if the temperature is not lowered the biological process continues, which is unfavourable. Therefore the treated sludge also passes a heat exchanger for cooling the sludge. In some systems the same heat exchanger for heating the sludge before entering the digester is used for cooling the treated sludge, i.e. heat from the treated sludge is used to heat the sludge entering the digester, as in Fig. 1.

It is a general aim to have the sludge as dry as possible when entering and leaving the digester. In other words, it is an aim to increase the dry substance content of the sludge in order to decrease the overall volume of the sludge since water is removed from the sludge. Due to the fact that the remaining volume of the sludge is decreased, the heating energy required to heat the sludge in heat exchanger before entering the digester can be reduced. In fact, the heating energy reduction is directly proportional to the decreased volume of the sludge. In addition, the subsequent digesting process is more efficient since the volume to be digested is decreased in proportion to the decrease of the overall volume. Consequently, an increase of the dry substance content from 3 % to 6 % entails that the heating requirement in heat exchanger and the volume in the digester are reduced with about 50 %.

However, since the viscosity of the sludge increases with the dry content the feeding of the sludge is limited to what the pumps are able to handle. Alternatively, larger pumps have to be used in order to pump the thickened sludge, which, inter alia, increases the energy consumption. The problem increases when the sludge is to be fed through heat exchangers during its treatment since a higher viscosity of the sludge entails impaired heat conducting properties between the warm surfaces of the heat exchanger and the sludge. Thereby, the efficiency of the heat transfer decreases and less heat energy will be exchanged from incoming to outgoing sludge. This taken together has up to now put limits on how dry the sludge to be treated can be. This problem has with new thickening techniques such as polymer addition to the sludge. Studies have shown that the viscosity of the sludge also is increased significantly when it includes polymers.

Thus, there is a need of an improved method and system for treating sludge that has a high dry substance content and high viscosity in a process and energy efficient way.

BRIEF DESCRIPTION OF THE INVENTION

An object of the present invention is to provide a method and system for treating sludge that has a high dry substance content and high viscosity in a process and energy efficient way.

This and other object are obtained by the present invention by providing a method, a system, a computer readable medium, and a computer program having the features defined in the independent claims. Different embodiments are defined in the dependent claims.

According to a first aspect of the present invention, there is provided a method of treating sludge in a system comprising a pump having an inlet and an outlet connectable to a sludge feeding line being connectable to a heat exchanger. The method comprises the steps of feeding sludge with the aid of the pump; decreasing the viscosity of the sludge upstream said heat exchanger in a viscosity decreasing device; and passing the sludge having decreased viscosity through the heat exchanger for heating the sludge.

According to a second aspect of the present invention, there is provided a system for treating sludge comprising a pump having an inlet and an outlet connectable to a sludge feeding line; viscosity decreasing means arranged to decrease the viscosity of the sludge to be treated connectable to the sludge feeding line in the vicinity of the pump; and a heat exchanger connectable to said viscosity decreasing means via the sludge feeding line.

According to third aspect of the present invention, there is provided a computer program for a system according to the second aspect of the present invention. The program comprises program instructions, which when ran in a control means of the system, causes the control means to perform steps of the inventive method.

According to fourth aspect of the present invention, there is provided a computer program product comprising computer readable medium and a computer program according to the third aspect, wherein the computer program is stored on the computer readable medium.

An advantage of the present invention is that the heat transfer in the heat exchanger to the sludge can be improved since a lower viscosity of the sludge entails improved heat conducting properties between the warm surfaces of the heat exchanger and the sludge. Thereby, the heat transfer and the efficiency of the heat exchanger can be improved, which, in turn, affects the overall energy consumption of the system in a positive way. Moreover, the benefits of the present invention are also in that it facilitates the pumping of sludge since the viscosity is decreased. On the other hand this enables the pumping of sludge with a higher dry content than was previously feasible for the same pump capacity. This also contributes to a reduced energy consumption of the system. Moreover, the use of primary energy in the system can be reduced since energy can be recovered from a heat exchanger.

The reliability of the system is also improved due to the decreased viscosity.

For applications handling sludge from a sewage treatment plant the sludge is fed to a digester. The sludge having decreased viscosity may then be fed through a heat exchanger for heating the sludge with the aid of a pump and decreasing the viscosity of the sludge in the vicinity of the pump.

For treatment of sludge from sewage treating plants, this means that the treatment process of the sludge in e.g. digesters is promoted because the stabilizing process in the digester is favoured by a higher dry content.

The combination of a pump and a viscosity decreasing means can be applied in many locations in a sludge treating system, such as upstreams a heat exchanger, in a sludge circulation and heating circuit connected to the digester, and for feeding the treated sludge to an outlet of the system.

According to preferred embodiments of the present invention, control means can be arranged to control the function of the pump, the viscosity decreasing means, and the heat exchanger by using different operating parameters and properties of the sludge. For example, the viscosity decreasing means can be controlled as a function of the pressure, energy optimization, flow and temperature of the sludge, and the composition of the sludge. The heat exchanger may be controlled as a function of the flow of the sludge.

Furthermore, the control means can be arranged for two-way transfer of information, i.e. information can be transferred to and can be obtained from the pump, the viscosity decreasing means, and the heat exchanger. Thus, the control means is capable of obtaining operating parameters from the pump, the viscosity decreasing means, and the heat exchanger. Thereby, the operating parameters can be stored in a log file for, for example, analyzing, optimizing and monitoring purposes.

Different operating parameters of the system can also be monitored and used in the control of the pump, the viscosity decreasing means, and the heat exchange, by means of sensors such as the temperature of the sludge, the flow of the sludge, or the pressure of the sludge.

One advantageous viscosity decreasing means is a macerator of a rotating disc type, having a narrow gap between the rotating disc and a ring arranged with cutting edges. This narrow gap and the rotational speed of the disc causes a high shear rate and thus a high shear stress, which causes the decrease of the viscosity. There are of course other feasible devices that are capable of this, but one further advantage with the macerator is that it is already adapted to this type of material and to sewage treatment systems and can thus be easily implemented in a system for treating sludge.

These and other aspects of and advantages with the present invention will become apparent from the following detailed description and from the accompanying drawings.

DETAILED DESCRIPTION OF THE DRAWINGS

In the following detailed description of the invention reference will be made to the accompanying drawings, of which

Fig. 1      shows a conventional system for treating sludge,

Fig. 2      shows the behaviour of sludge and the like material for the shear rate versus the shear stress,

Fig. 3a      shows one embodiment of the present invention,

Fig. 3b      shows another embodiment of the present invention,

Fig. 4      shows a variant of the embodiment according to Fig. 3a, and

Fig. 5      shown the general principles of the method for treating sludge according to the present invention.

DESCRIPTION OF PREFERRED EMBODIMENTS

The general aim of the present invention is to facilitate the transport and handling of sludge and other materials displaying similar properties.

Sludge has in general a high viscosity, which is increased with the dry content of the sludge and with the polymer content. This creates a problem when handling sludge in a sewage treatment plant for instance. One important aspect and goal when handling waste water is to reduce the water content as much as possible from the sludge before treating the sludge, a biological, chemical of thermal stabilization of the sludge, in order to reduce the odours from the sludge but also reduce the weight and volume.

The dewatering can be done by different techniques such as centrifugation, pressing or vacuum. The dewatered sludge should then be fed to be stabilized, where the feeding is done by pumps 10.

In order to facilitate the feeding of the sludge with higher dry content ratios, the present invention proposes the following solution.

As mentioned, sludge has a high viscosity, which entails that the heat transfer in the heat exchangers is low and makes it difficult to pump and feed it through different devices and stations, such as through a heat exchanger 16. However, the viscosity of sludge is not constant, but decreases with the shear rate $\gamma$, as is shown schematically in Fig. 1, the viscosity being the function

$$\frac{d\tau}{d\dot\gamma}$$

, where $\tau$ is the shear stress. I.e. the inclination of the curve is the viscosity. The sludge further has thixotropic properties, meaning that the viscosity is decreased when exposed to high shear rate and is increased some time after reducing or omitting the shear rate.

In the following, there will be disclosed preferred embodiments of the methods and systems for treating sludge that has a high dry substance content and a high viscosity in a process and energy efficient way according to the present invention.

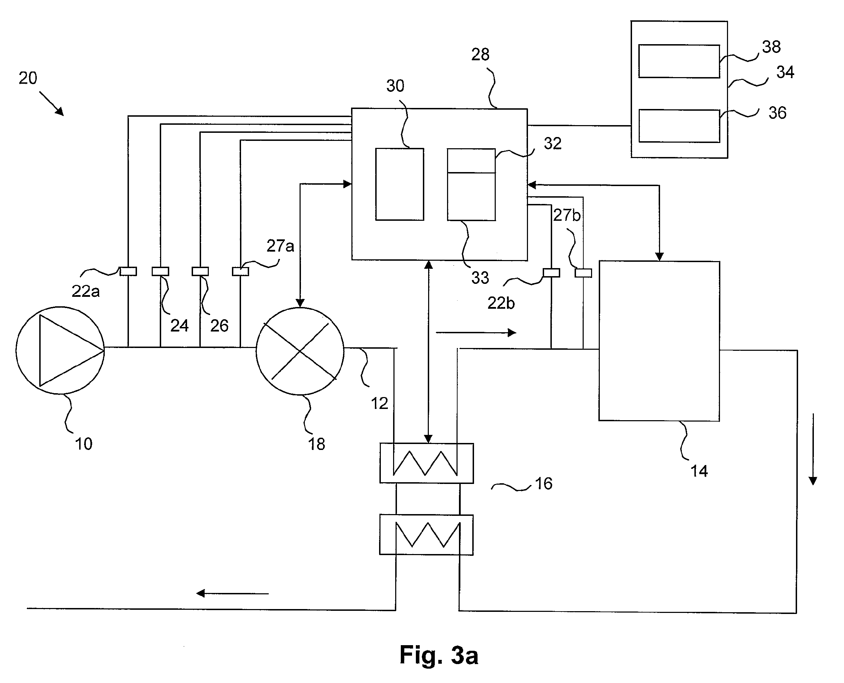

With reference now to Fig. 3a, a system for treating sludge that has a high dry substance content and a high viscosity in a process and energy efficient way according to the present invention in which the method according to the present invention may be implemented will be described. The inventive system 20 of Fig. 2 includes at least one variable-speed pump 10, preferably the pump 10 is a variable frequency drive controlled pump (VFD pump), for pumping sludge in a sewage treatment plant. The system to be discussed herein is directed to a sewage treating plant, but is not intended to be limited thereto, and indeed the principles herein are applicable to any fluid pumping system.

In this embodiment, a viscosity decreasing device 18 is arranged downstream the pump 10 in the feed line 12. The viscosity decreasing device has to be capable of applying such a shear stress on the sludge that the viscosity is considerably reduced, being in the area A of the curve in Fig. 1. One type of device that has been found capable of applying such shear stresses that the viscosity is decreased is a type of macerator that has a rotating disc attached to a shaft driven by a motor. At the circumference of the disc, a number of cutting plates are arranged, having their cutting edges generally extending in the direction the shaft. Outside the disc and the cutting plates, a ring is arranged, with a rather narrow gap between the disc and the ring. The ring is also arranged with a plurality of cutting edges. The general function of this macerator is to chop or cut objects in a fluid into small particles that otherwise could block a pipe system, pumps and the like.

Because the disc with the cutting plates is rotated with such a speed, and because the rather narrow gap between the disc and the ring, a high shear rate is applied to the sludge passing the gap, whereby its viscosity is reduced. Thereby the pump arranged adjacent the macerator has a much easier task in pumping the sludge through the feed lines. For example pumping the sludge through the heat exchanger can be done more easily than before. It is also possible to increase the dry content of the sludge, due to the viscosity decreasing effect of the macerator, well beyond what was previously feasible.

There are of course other viscosity decreasing devices that may be used instead of the above described type of macerator, devices that are capable of creating a high shear stress in the fluid. One advantage with a macerator, at least in the application treatment of waste water, is that it is already adapted to the type of media to be treated, it can easily be connected to existing sludge feed lines, and it has the original intended function of shredding eventually occurring pollutants.

The viscosity decreasing device 18 is, in turn, connected to a to a digester 14 for treating the sludge. The digesters usually work with different specific temperatures, commonly 37 or 55°C. Because the sludge after the dewatering may be in the range 8-15°C, it is advantageous if the sludge is heated before entering the digester, which in this embodiment is done with a heat exchanger, 16. During the process in the digester, the sludge may also circulated through a further heat exchanger for heating the sludge to the appropriate temperature. According to an alternative, the viscosity decreasing means is connected to a hygenization device (not shown) in which the sludge is heated to about 70°C, and thereafter the sludge can be fed to, for example, the digester.

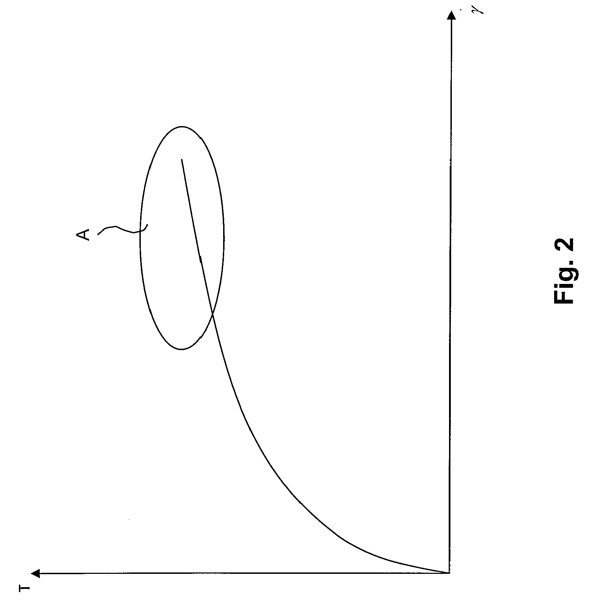

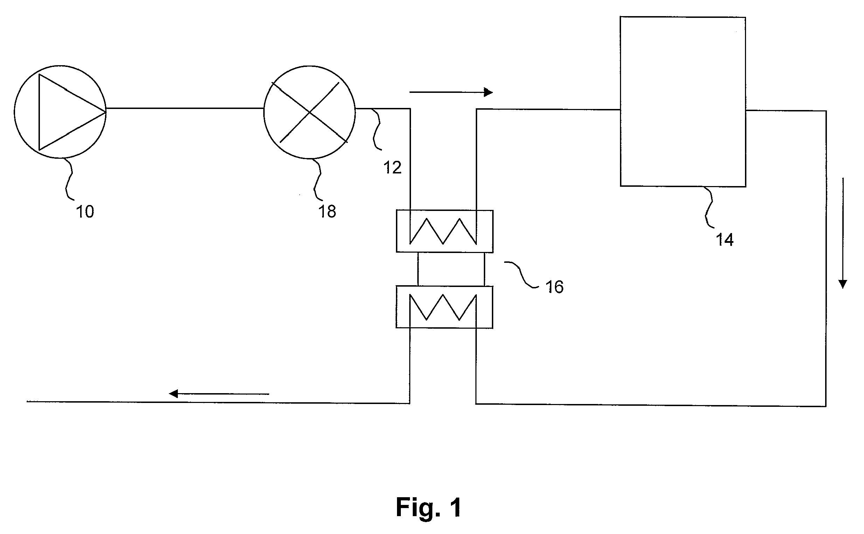

The treated sludge that is taken out of the digester often has an increased temperature, and if the temperature is not lowered the biological process continues, which is unfavourable. Therefore the treated sludge also passes a heat exchanger for cooling the sludge. In some systems the same heat exchanger for heating the sludge before entering the digester is used for cooling the treated sludge, i.e. heat from the treated sludge is used to heat the sludge entering the digester, as in Fig. 1 and 4.

Moreover, the system 20 comprises control means 28 connected to the pump 10, the viscosity decreasing device 18, and the heat exchanger 16. The control means 28 is, in turn, controlled by processing means 30. Moreover, the control means 28 includes storage means 32 communicating with the processing means 30 via a standard control/address bus (not shown). The storage means 32 may include a random access memory (RAM) and/or a non-volatile memory such as read-only memory (ROM). As will be appreciated by one of ordinary skill in the art, storage means may include various types of physical devices for temporary and/or persistent storage of data which includes solid state, magnetic, optical and combination devices. For example, the storage means may be implemented using one or more physical devices such as DRAM, PROMS, EPROMS, EEPROMS, flash memory, and the like. The storage means 32 may further comprise a computer program 33 comprising instructions for bringing a computer to perform method steps in accordance with the present invention.

Furthermore, the system includes a number of sensing means 22, 24, 26 and 27 arranged for sensing different operating parameters of the system and being connected to the control means 28 for communicating sensed values of the different parameters to the control means 28.

In one embodiment, the system 20 comprises the following sensing means:

- a first pressure sensor 22a localised between the pump 10 and the viscosity decreasing device 18 and arranged to sense the pressure of the sludge fed to the viscosity decreasing device 18 and to communicate a value corresponding to the instantaneous pressure of the sludge to the control means 28;

- a second pressure sensor 22b localised between the heat exchanger 16 and the digester 14 and arranged to sense the pressure of the sludge fed to the digester 14 and to communicate a value corresponding to the instantaneous pressure of the sludge to the control means 28;

- a flow meter 24 localised between the pump 10 and the viscosity decreasing device 18 for measuring the flow of the sludge and to communicate a value corresponding to the instantaneous flow of the sludge to the control means 28;

- a sludge level meter 26 localised between the pump 10 and the viscosity decreasing device 18 arranged to sense the level of the sludge and to communicate a value corresponding to the instantaneous level of the sludge to the control means 28;

- a first temperature sensor 27a localised between the pump 10 and the viscosity decreasing device 18 and arranged to sense the temperature of the sludge fed to the viscosity decreasing device 18 and to communicate a value corresponding to the instantaneous temperature of the sludge to the control means 28; and

- a second temperature sensor 27b localised between the heat exchanger 16 and the digester 14 and arranged to sense the temperature of the sludge fed to the digester 14 and to communicate a value corresponding to the instantaneous temperature of the sludge to the control means 28.

As the man skilled within the art easily realizes, the are a number of other parameters that may be of interest as, for example, the velocity of the sludge. In other embodiments, some of the above-mentioned sensors can be omitted and they can be combined in an arbitrary way. Moreover, there are also a number of alternative localisations of the different sensing means in the system. For example, the flow meter 24 can be localised between the viscosity decreasing means 18 and the heat exchanger 16, or between the heat exchanger 16 and the digester 14 instead. It should be noted that the above-mentioned sensors and the locations thereof only are examples and, accordingly, constitute a non-exhaustive number of examples.

In addition, the control means 28 may be arranged in communication with an operator unit 34 including a keyboard 36, which allows the operator to input, for example, control commands, and a display or screen 38 for presenting information related to the operation of the pump or the pumps, for example, time history of the operating parameters, or status information of the pump or the pumps. For example, the operator unit 34 may be a personal computer. Accordingly, an operator can monitor the operation of the system as well as different operating parameters associated to the operation thereof via the display 38. For example, operating parameters sensed by means of the first pressure sensor 22a, the second pressure sensor 22b, the flow meter 24, the level meter 26, the first temperature sensor 27a, and the second temperature sensor 27b. According to another embodiment, the display is a touch sensitive screen and in this case a number of soft-keys can be arranged on the screen in order to present different commands at different presented interfaces on the display 38. Furthermore, the operator unit 34 may comprise storage means (not shown), which, in turn, may include a random access memory (RAM) and/or a non-volatile memory such as read-only memory (ROM). As will be appreciated by one of ordinary skill in the art, storage means may include various types of physical devices for temporary and/or persistent storage of data which includes solid state, magnetic, optical and combination devices. For example, the storage means may be implemented using one or more physical devices such as DRAM, PROMS, EPROMS, EEPROMS, flash memory, and the like. The storage means of the operator unit may be arranged to store different sensed operating parameters, such as, values obtained from the first pressure sensor 22a, the second pressure sensor 22b, the flow meter 24, the level meter 26, the first temperature sensor 27a, and the second temperature sensor 27b. Thereby, it is possible to provide a log function for the system.

Thus, the control means 28 can be arranged to control the function of the pump 10, the viscosity decreasing means 18, and the heat exchanger 16 by using the operating parameters and properties of the sludge. For example, the speed of the viscosity decreasing means 18 can be controlled as a function of the flow and temperature of the sludge, and the composition of the sludge. According to another example, the energy used to decrease the viscosity of the sludge can be controlled on basis of the pressure drop of the sludge over the heat exchanger.

The operator is able to input sludge properties into the system by means of the operator unit 38. The heat exchanger 16 may be controlled as a function of the flow of the sludge. Furthermore, the control means 28 is arranged for two-way transfer of information, i.e. information can be transferred to and can be obtained from the pump 10, the viscosity decreasing means 18, and the heat exchanger 16. Thus, the control means is capable of obtaining operating parameters from the pump 10, the viscosity decreasing means 18, and the heat exchanger 16. These operating parameters can also be stored in a log file.

As the man skilled in the art easily realizes, there are a number of conceivable functions of the system that can be controlled by means of the control means and it should be noted that the above-mentioned functions only are examples and non-exhaustive.

There are of course other viscosity decreasing devices that may be used instead of the above described type of macerator, devices that are capable of creating a high shear stress in the fluid. One advantage with a macerator, at least in the application treatment of waste water, is that it is already adapted to the type of media to be treated, it can easily be connected to existing sludge feed lines, and it has the original intended function of shredding eventually occurring pollutants.

The use of a viscosity decreasing device may be done in many more instances, such as after the digester 14 when feeding the treated or stabilized sludge through a heat exchanger 16 for cooling the sludge, as is shown in Fig. 4. There is also here a pronounced advantage of the viscosity decreasing device in that the dry content in the digester can be increased, which is favourable for the process in the digester.

Because the sludge has a thixotropic behaviour, the pump, heat exchanger and the viscosity decreasing device should preferably be placed in the vicinity of each other in the feed line in order to take advantage of the viscosity decreasing effect as much as possible.

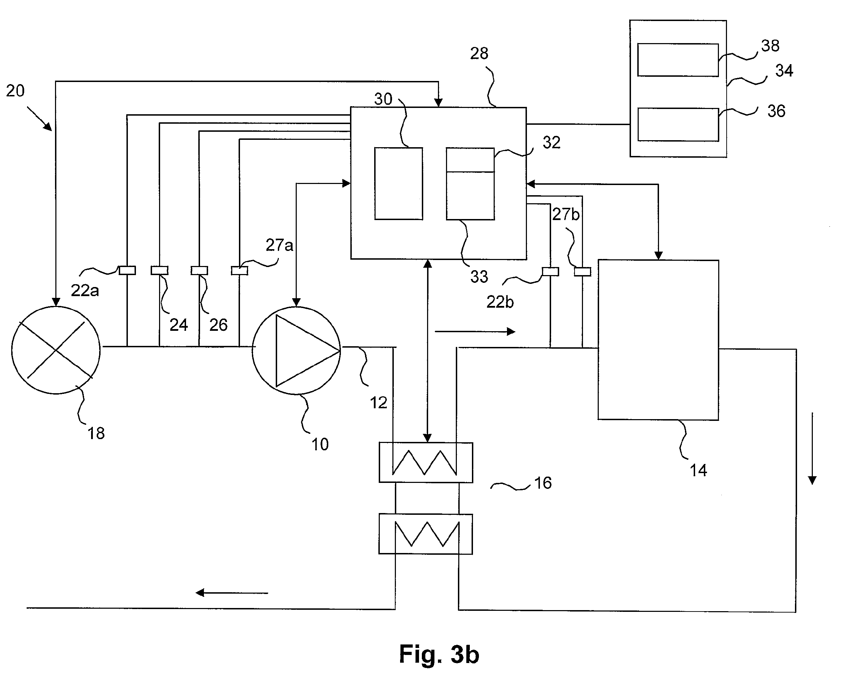

In Fig. 3b, another embodiment of the system is shown. The pump 10 is arranged downstream of the macerator 18.

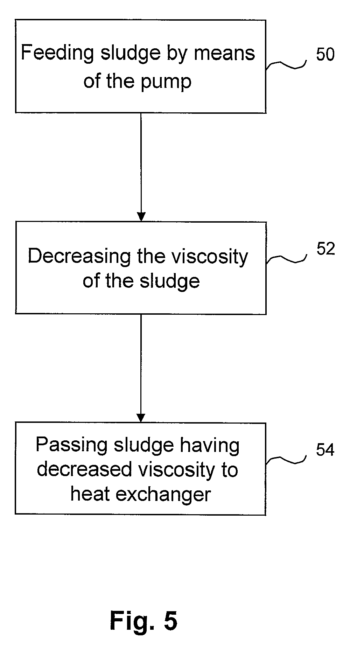

Referring now to Fig. 5, the general principles of the method for treating sludge according to the present invention will be shown. With reference first to Fig. 5, in step 50, sludge is being fed by means of the pump 10 to the viscosity decreasing device 18. Then, at step 52, the viscosity of the sludge is decreased in the viscosity decreasing device 18. Thereafter, at step 54, the sludge having a lower viscosity is passed to the heat exchanger 16. As discussed above, the pump can be located upstream or downstream of the viscosity decreasing device 18.

Thereby, the dry substance content of the sludge can be increased and, accordingly, the overall volume of the sludge can be reduced. As discussed above, the heat transfer of the heat exchanges is improved as the viscosity is decreased and, thereby the efficiency of the heat exchanger is improved, which, in turn, affects the overall energy consumption of the system in a positive way. Due to the fact that the remaining volume of the sludge is decreased, the heating energy required to heat the sludge in heat exchanger before entering the digester can, in turn, be reduced. In fact, the heating energy reduction is directly proportional to the decreased volume of the sludge. In addition, the subsequent digesting process is more efficient since the volume to be digested is decreased in proportion to the decrease of the overall volume. Consequently, an increase of the dry substance content from 3 % to 6 % entails that the heating requirement in heat exchanger and the volume in the digester are reduced with about 50 %. Studies have shown that the present invention is suitable for transporting sludge having a dry substance content of about 2-10 %, and preferably a dry substance content of about 3-8 %.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the present invention. Those of ordinary skill in the art will readily appreciate that the present invention could be implemented in a wide variety of embodiments, comprising hardware and software implementations, or combinations thereof. This application is intended to cover any adaptations or variations of the embodiments discussed herein. Consequently, the present invention is defined by the wordings of the appended claims and equivalents thereof.

**Claims**

1. Method of treating sludge in a system comprising a pump (10) having an inlet and an outlet connectable to a sludge feeding line (12) being connectable to a heat exchanger (16), comprising the steps of

- feeding sludge with the aid of the pump (10);

- decreasing the viscosity of the sludge in the vicinity of said heat exchanger (16) in a viscosity decreasing device (18); and
- passing the sludge having decreased viscosity through the heat exchanger (16) for heating the sludge.

2. Method according to claim 1, wherein the decreasing of the viscosity of the sludge is performed downstream of the pump or upstream of the pump.

3. Method according to any one of preceding claims, further comprising the step of

- sensing the flow of the sludge in said sludge feeding line (12).

4. Method according to claim 3, further comprising the step of

- controlling the energy used to decrease the viscosity of the sludge on basis of at least the flow of the sludge.

5. Method according to any one of preceding claims, further comprising the steps of:

- sensing the pressure of the sludge in said sludge feeding line (12) upstream said heat exchanger (16); and/or
- sensing the pressure of the sludge in said sludge feeding line (12) downstream said heat exchanger (16).

6. Method according to claim 5, further comprising the step of

- controlling the energy used to decrease the viscosity of the sludge on basis of at least the pressure drop of the sludge over the heat exchanger (16).

7. Method according to any one of preceding claims, further comprising the steps of:

- sensing the temperature of the sludge in said sludge feeding line (12) upstream said heat exchanger (16); and/or
- sensing the temperature of the sludge in said sludge feeding line (12) downstream said heat exchanger (16).

8. Method according to any one of preceding claims, further comprising the steps of

- controlling the energy added to the sludge passing the heat exchanger (16) by varying the temperature of the heat exchanger (16).

9. Method according to any of the preceding claims, further comprising the step of feeding the sludge to a digester (14) being connectable to said heat exchanger (16) or to a hygenization device.

10. Method according to claim 9, further comprising the step of passing the sludge having decreased viscosity through a heat exchanger for heating the sludge before entering the digester.

11. Method according to claim 9 or 10, further comprising the step of feeding sludge withdrawn from the digester or the hygenization device through a heat exchanger for cooling the sludge.

12. Method according to claim 11, further comprising the step of feeding the withdrawn sludge with the aid of a pump and decreasing the viscosity of the sludge in the vicinity of the pump.

13. System for treating sludge comprising

a pump (10) having an inlet and an outlet connectable to a sludge feeding line (12);
viscosity decreasing means (18) arranged to decrease the viscosity of the sludge to be treated connectable to said sludge feeding line (12) in the vicinity of the pump (10); and
a heat exchanger (16) connectable to said viscosity decreasing means (18) via said sludge feeding line.

14. System according to claim 13, wherein said viscosity decreasing means (18) is arranged downstream or upstream said pump (10).

15. System according to claim 13 or 14, further comprising flow sensing means (24) arranged to sense the flow of the sludge in said feeding line (12).

16. System according to claim 15, further comprising control means (28) connected to flow sensing means (24) and arranged to control the energy used in said viscosity decreasing means (18) to decrease the viscosity of said sludge on basis of at least the flow of said sludge.

17. System according to claim 15 or 16, wherein said control means (28) is arranged to control the energy used in said viscosity decreasing means (18) to decrease the viscosity of said sludge on basis of at least the composition of the sludge.

18. System according to any one of preceding claims 13-17, further comprising:

a first pressure sensor (22a) connected to said control means (28) and arranged to sense the pressure of said sludge in said sludge feeding line (12) upstream said heat exchanger (16); and/or

a second pressure sensor (22b) connected to said control means (28) and arranged to sense the pressure of said sludge in said sludge feeding line (12) downstream said heat exchanger (16).

19. System according to any one of preceding claims 13-18, further comprising:

a first temperature sensor (27a) connected to said control means (28) and arranged to sense the pressure of said sludge in said sludge feeding line (12) upstream said heat exchanger (16); and/or

a second temperature sensor (27b) connected to said control means (28) and arranged to sense the pressure of said sludge in said sludge feeding line (12) downstream said heat exchanger (16).

20. System according to any one of preceding claim 13-19, wherein said control means (28) is arranged to control the energy added to the sludge passing said heat exchanger (16) by varying the temperature of the heat exchanger (16).

21. System according to any one of preceding claims 13-20, wherein said control means (28) is arranged to control the energy used to decrease the viscosity of the sludge on basis of at least the pressure drop of the sludge over the heat exchanger (16).

22. System according to any one of preceding claims 13-21, further comprising a digester (14) and/or a hygenization device connectable to said sludge feeding line upstream of said pump (10) and said viscosity decreasing means (18).

23. System according to any one of preceding claims 13-22, further comprising a heat exchanger (16) connectable to said sludge feeding line downstream of said pump and said viscosity decreasing means.

24. System according to claim 23, wherein the sludge withdrawn from the digester (14) or the hygenization device is fed through the heat exchanger (16) for cooling the sludge.

25. System according to claim 24, wherein the withdrawn sludge is fed with the aid of a pump (10) and the viscosity of said sludge is decreased in the vicinity of the pump (10) using a viscosity decreasing means (18).

26. System according to any of the preceding claims 13-25, wherein said viscosity decreasing means is a macerator.

27. System according to claim 26, wherein said macerator is arranged with an impeller.

28. Computer program (33) for a control means (28) of a system of treating sludge, wherein said program (33) comprises program instructions, which when ran in the control means (28), causes the control means (28) to perform steps of anyone of claims 1-12.

29. Computer program product comprising computer readable medium (32) and a computer program (33) according to claim 27, wherein said computer program (33) is stored on said computer readable medium (32).

**Fig. 4**

EP 1 717 209 A1

**Fig. 3a**

EP 1 717 209 A1

Fig. 3b

Fig. 2

Fig. 1

50 — Feeding sludge by means of the pump

52 — Decreasing the viscosity of the sludge

54 — Passing sludge having decreased viscosity to heat exchanger

Fig. 5

## EUROPEAN SEARCH REPORT

Application Number

EP 05 10 3377

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 564 074 A (TEXACO DEVELOPMENT CORPORATION) 6 October 1993 (1993-10-06) * the whole document * ----- | 1-27 | C02F11/02 |
| A | FR 2 840 895 A (ONDEO DEGREMONT) 19 December 2003 (2003-12-19) * figure 1 * ----- | 1-27 | |

TECHNICAL FIELDS
SEARCHED (Int.Cl.7)

C02F

The present search report has been drawn up for all claims

| Place of search | Date of completion of the search | Examiner |
|---|---|---|
| The Hague | 3 June 2005 | Janssens, C |

**EP 1 717 209 A1**

## ANNEX TO THE EUROPEAN SEARCH REPORT
## ON EUROPEAN PATENT APPLICATION NO.

EP 05 10 3377

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2005

| Patent document cited in search report | | Publication date | Patent family member(s) | | Publication date |
|---|---|---|---|---|---|
| EP 0564074 | A | 06-10-1993 | US | 5188741 A | 23-02-1993 |
| | | | CA | 2086645 A1 | 02-10-1993 |
| | | | CN | 1082007 A ,C | 16-02-1994 |
| | | | DE | 69306024 D1 | 02-01-1997 |
| | | | DE | 69306024 T2 | 13-03-1997 |
| | | | EP | 0564074 A1 | 06-10-1993 |
| | | | JP | 2729744 B2 | 18-03-1998 |
| | | | JP | 6039400 A | 15-02-1994 |
| FR 2840895 | A | 19-12-2003 | FR | 2840895 A1 | 19-12-2003 |
| | | | AU | 2003263240 A1 | 31-12-2003 |
| | | | WO | 03106355 A2 | 24-12-2003 |

EPO FORM P0459

For more details about this annex : see Official Journal of the European Patent Office, No. 12/82

16